# EUROPÄISCHE PATENTANMELDUNG

(11) **EP 2 457 803 A2**
(43) Veröffentlichungstag der Anmeldung: **30.05.2012**
(21) Anmeldenummer: 11189363.2
(22) Anmeldetag: 16.11.2011
(51) Int. Cl.: B62B 7/10

(54) **Schiebewagengestell**

(30) Priorität: 29.11.2010 DE 202010013007 U
(71) Anmelder: Beger, Udo, 84034 Landshut (DE)
(72) Erfinder: Beger, Udo, 84034 Landshut (DE)
(74) Vertreter: Pröll, Jürgen

(57) **Zusammenfassung**

Schiebewagengestell, aufweisend mindestens einen unteren, sich von vorne nach hinten erstreckenden Holm (1a, 1b), an dem vorderseitig unmittelbar oder an einem damit verbundenen Brückenelement (2) zwei seitliche, sich von unten nach oben erstreckende, mindestens in vertikaler Richtung verschwenkbare Schrägholme (3a, 3b) angelenkt sind, die zum Zwecke des Zusammenklappens des Schiebewagengestells nach unten, in Richtung der Ebene des mindestens einen unteren Holmes (1a, 1b) verschwenkbar sind. Zwischen den beiden seitlichen Schrägholmen (3a, 3b) oder an dem diese frontseitig verbindenden Brückenelement (2) einerseits und dem Halter andererseits (4) ist eine in direkter Wirkverbindung stehende Kopplungsmechanik (7, 8) vorgesehen, die die Bewegung der seitlichen Schrägholme (3a, 3b) in eine Schwenkbewegung des Halters (4) transformiert. Der um eine horizontale Achse verschwenkbare Halter (4) und das ebenfalls um eine horizontale Achse verschwenkbare Brückenelement (2) sind in mindestens einem Abstandshalter beabstandet zueinander verschwenkbar gelagert, der an dem unteren Holm (1a, 1b) fixiert ist.

## Beschreibung

Die Erfindung betrifft ein Schiebewagengestell, mit den im Oberbegriff des Anspruches 1 angegebenen Merkmalen.

Aus der US 2009/0278335 A1 ist ein faltbares Schiebewagengestell für einen Kinderwagen bekannt, das aus zwei spiegelbildlich und parallel angeordneten Seitenteilkonstruktionen besteht, die über ein Scherengestänge aufeinander zufahrbar sind. Die Seitenkonstruktionen bestehen aus einem von unten nach oben schräg verlaufenden Seitenholm und einem unteren von vorn nach hinten verlaufenden unteren Holm, an dessen hinteren Ende Hinterradanordnungen befestigt sind, deren vorderes Ende an einem Verbindungsteil schwenkbeweglich um eine horizontale Achse befestigt ist. An dem Verbindungsteil ist obenseitig ebenfalls ein Schwenklager für den Schrägholm vorgesehen. In dem Verbindungsteil ist ferner ein Halter drehbar gelagert, an dessen Enden ein Vorderrad befestigt ist. Dieser Halter weist einen Halbzahnkranz auf, der mit einem Teilzahnkranz am Lagerende des Schrägholmes in dem Verbindungsteil kämmt. An den Schrägholmen sind Schiebestangen angelenkt, wobei das Schwenklager beabstandet zum unteren Ende der Schiebestange angeordnet ist und die Schiebestange sich mit einem Teilabschnitt in den Schrägholm einfügt und am Ende ein Drehlager für eine Stützstrebe aufweist. An der Stützstrebe sind Drehlager für ein Kreuzgestänge vorgesehen, das mit den unteren Enden im vorderen Bereich der unteren Holme angelenkt ist. Beim Vorschwenken der Schiebestangen werden automatisch über das Kreuzgestänge die Seitenkonstruktionen parallel aufeinander zu gezogen. Dies ist erst möglich, wenn die zwischen dem unteren Holmen angeordneten Aufstellsicherungen und die zwischen den Schiebestangen im oberen Bereich vorgesehenen Aufstellarretierungen gelöst werden. Beim Verschwenken greifen die Ritzel der Zahnkränze in den Verbindungsteilen ineinander, wodurch gleichzeitig die Vorderradhalterungen nach hinten in Richtung der unteren Holme verschwenkt werden.

Ein Schiebewagengestell der gattungsgemäßen Art ist aus der DE 20 2004 020 186 U1 bekannt. In dieser Schrift ist ferner in den Figuren 9 bis 11 ein Beispiel einer Vorderradanordnung dargestellt, bei dem das Vorderrad in einer Gabel gelagert ist, die ihrerseits an einem Schwenkelement mit einem nach oben vorstehenden Lagerzapfen drehbar gelagert und durch Sicherungselemente gegen Abzug gesichert ist. Das Schwenkelement ist in einem Befestigungskopf um eine horizontale Achse verschwenkbar gelagert und zwar derart, dass die Vorderradanordnung mit dem Vorderrad aus einer unteren aufgestellten Gebrauchsstellung in eine obere Verstauposition zwischen den beiden unteren Holmen verschwenkbar ist. Das Schwenkelement muss von Hand, nach Lösen einer Arretierung, verschwenkt werden. Nach dem Zurückdrücken des Rades aus dem Raum zwischen den beiden unteren Holmen nach unten rastet das Schwenkelement in den Befestigungskopf wieder ein.

2usammenklappbare Schiebewagengestelle der gattungsgemä-βen Art sind ferner in Form eines Fahrgestelles für einen Kinder- oder Puppenwagen aus der DE 20 2010 008 030 U1 bekannt.

Aus der EP 1 894 810 A2 ist ein Fahrgestell eines Kinderwagens bekannt, das untere, von vorn nach hinten sich erstreckende, ovalförmig ausgebildete Holme aufweist, an denen vorderseitig eine Gelenkeinheit als Brückenteil vorgesehen ist, an dem oval ausgeführte Schrägholme befestigt sind, die am oberen Abschnitt Gelenke aufweisen, an denen Schiebestangen befestigt sind. In der Aufstellposition sichert ein aus zwei Stangen und einem Schlosssystem gebildetes Spreizgestänge zwischen den Schiebestangen den Verbund im aufgestellten Zustand. Die Schiebestangen überragen mit einem Endabschnitt das jeweilige Gelenk nach unten und verlaufen parallel zum Schrägholm und sind jeweils mit einer Stange eines Kreuzgestänges gekoppelt, die mit ihren unteren Enden an Schwenklagern an den unteren Holmen befestigt sind, so dass beim Überschwenken der Schiebestangen über die Schrägholme das Kreuzgestänge ein Zusammenlegen des Gestells in vertikaler und in horizontaler Richtung bewirkt. Bei dem Kreuzgestänge handelt es sich um ein X-förmig ausgebildetes Gestänge aus zwei Stangen, die miteinander schwenkbeweglich mittig verbunden sind, so dass eine Kraftübertragung in horizontaler Richtung bei gleichzeitigem Strecken und damit ein Zusammenführen der beiden Stangen beim Vorschwenken der Schiebstangen gegeben ist. Die unteren Gelenke für das Kreuzgestänge sind als Drehschwenkgelenke ausgeführt, um ein Verschwenken in zwei Richtungen zu ermöglichen.

Aus der EP 1 849 680 A2 ist ein Kinderwagengestell bekannt, bei dem zwei sich nach hinten erstreckende untere Holme vorgesehen sind, die an einem die Schrägholme verbindenden Brückenteil befestigt sind. Auf den unteren Holmen sind verschiebbar Schwenkgelenke angebracht, an denen die unteren Schenkel der Stangen eines Kreuzgestänges schwenkbar befestigt sind, an deren unteren Enden die Hinterräder gelagert sind. Die oberen Schenkelenden der Stangen des Kreuzgestänges sind an Schwenkgelenken an den Schrägholmen befestigt. Durch Vorschieben der verschiebbaren Schwenkgelenke auf den Holmen bewirkt das Scherengestänge ein Zusammenfahren der Schrägholme bei gleichzeitigem Verschwenken in Richtung der unteren Holme, wobei die Hinterräder die Vorderräderanordnungen seitlich überstehen. Ferner ist vorgesehen, dass die Schiebestangen vorklappbar an den Schrägholmen vorgesehen sind.

Aus der DE 693 02 959 T2 ist ein klappbarer Kinderwagenrahmen bekannt, der auch als Standfuß benutzt werden kann und aus zwei parallel angeordneten Seitenteilen besteht. Die Seitenteile bestehen aus hinteren Stützstreben und vorderseitigen Schrägholmen. An den Schrägholmen befinden sich Gelenke für die Stützstreben und für nach hinten abklappbare Schiebestangen, die das Gelenk um einen definierten Endabschnitt überstehen. Mit den Enden dieser Endabschnitte sind Stangen eines Kreuzgestänges verbunden, deren andere Enden an den Stützstreben angelenkt sind, so dass ein zwangsweises Zusammenfahren der Seitenteile gegeben ist, wenn die Schiebestangen nach hinten abgeklappt werden. Zwangsweise erfolgt dabei eine Bewegungstransformation, die die beiden Seitenteile nach vorheriger Entriegelung der Querverbindung aufeinanderzu bewegt.

Aus der DE 80 02 653 U1 ist ein klappbares Fahrgestell eines Kinderwagens mit zwei einander gegenüberstehenden seitlichen Tragegestängen bekannt, welche jeweils in ihrem mittleren Bereich gelenkig miteinander verbundene vordere und hintere Stützen aufweisen. An den oberen Enden der vorderen Stützen sind Griffstreben bzw. Schiebestangen angelenkt. Ferner ist eine Bodenkreuzverstrebung aus zwei in ihrem mittleren Bereich gelenkig miteinander verbundenen Streben vorgesehen, welche mit ihren freien Enden an den unteren Endstücken der einander diagonal gegenüberliegenden vorderen und hinteren Stützen angelenkt sind. Die freien Enden der Bodenkreuzverstrebung (Kreuzgestänge) sind zur Versteifung des Fahrgestells über seitliche Längsstreben miteinander verbunden. Die Längsstreben bestehen aus teleskopartig ineinander verschiebbaren Elementen, so dass beim Zusammenfahren des Gestells eine dem Spreizweg entsprechende Verlängerung erfolgt. Eine weitere hintere Kreuzverstrebung, die an L-förmigen Beschlägen an dem Kreuzungspunkt der seitlichen Tragegestänge angelenkt ist, ist zusätzlich vorgesehen, wobei die Schwenklager auf den Holmen verschiebbar angeordnet sind. Durch diese Anordnung lässt sich das Gestell schnell und mühelos auf eine äußerst kleine Abmessung zusammenklappen. Die Schiebestangen können dabei nach vorne geklappt werden. Der Abstand der Räder vergrößert sich allerdings beim Zusammenlegen, so dass ein solcher Kinderwagen oftmals nicht in den Kofferraum eines Fahrzeuges hineingestellt werden kann.

Aus der EP 1 671 869 B1 ist ferner ein Kinderwagengestell bekannt, bei dem untere Holme an einem Brückenteil angelenkt sind, an dem Schrägholme schwenkbeweglich angeordnet sind. An dem Brückenteil befindet sich eine Vorderradanordnung. Ferner sind die Enden der V-förmig auseinander gehenden unteren Holme angebracht, an denen hinten Räder vorgesehen sind. An den Schrägholmen sind verschiebbar Schiebestangen gelagert. An den unteren Enden der Schiebestangen sind an Drehgelenken Stangen eines Kreuzgestänges befestigt, deren andere Enden an den unteren Holmen angelenkt sind. Durch Vorschieben der Schiebestangen wird - nach vorheriger Aufhebung einer Spreizsicherung - das Kreuzgestänge nach vorne geschoben und verändert seine Breite entsprechend, so dass die hinteren Räder aufeinanderzu schwenken. Gleichzeitig können auch die Schrägholme nach unten geschwenkt werden. Die Größe des Kinderwagengestells im zusammengeklappten Zustand wird insbesondere von der Länge der Schiebestangen bestimmt.

Aus der EP 1 700 769 B1 ist ein zusammenklappbarer Rahmen eines Kinderwagens bekannt, der zwei hintere Streben aufweist, an deren unteren Enden jeweils ein Rad oder ein Radblock befestigt ist. Ferner weist der Rahmen einen Einsatz von Doppelscherenstreben auf, also ein Zweifachscherengestänge, wobei zwei erste Scherenstreben ein oberes V-förmiges Gelenk bilden und die unteren Enden jeweils ebenfalls miteinander verbunden sind. Die einzelnen Scherenstangen sind geradlinig ausgeführt und an unteren Fixgelenken an den Streben schwenkbeweglich befestigt und mit den oberen Enden an verschiebbaren Lagern schwenkbeweglich befestigt. Dieses Zweifachscherengestänge ermöglicht ein paralleles Zusammenfahren der beiden Seitenteile des Rahmens. Die hinteren Streben sind an Schrägholmen angelenkt und werden dabei automatisch zu den Vorderrädern gezogen.

Ein Kinderwagengestell mit dem gleichen Grundaufbau, nämlich mit Schrägholmen und Stützholmen oder Stützstreben, die daran schwenkbeweglich angelenkt sind, ist ferner aus der DE 200 10 365 U1 bekannt. Dieses Gestell wird zum einen über ein Spreizgestänge im Sitzbereich und zum anderen über ein Zweifachscherengestänge an den Stützholmen in einer Aufstellposition gesichert gehalten und kann durch Betätigen beider Spreizgestänge parallel zusammengefahren werden. Das Zweifachscherengestänge ist dabei obenseitig fix an den Stützholmen angelenkt, während die unteren Gelenke an Verschiebelagern auf den Stützholmen angebracht sind. Die einzelnen Scherenstangen des Zweifachscherengestänges sind geradlinig ausgeführt.

Bei anderen Wagengestellen, wie sie beispielsweise aus der EP 1 366 968 B1, DE 23 48 716 A1, EP 1 466 810 A1, EP 1 671 869 A1 oder der EP 1 894 810 A2 bekannt sind, ist vorgesehen, dass die oberen und unteren Holme beim Zusammenklappen des Gestells unter Berücksichtigung ihrer Schrägstellungen zueinander und der linearen oder nichtlinearen Längsausformungen zusammengeklappt werden, wobei aufgrund der Formgebung und Verläufe der einzelnen Holme unterschiedliche Wege zwischen den paarigen Anbindungspunkten der Scherenstangen bei den Bewegungsabläufen gegeben sind.

Aus der DE 20 2008 000 058 U1 ist ein zusammenklappbarer Schiebewagen für Kinder und/oder Puppen bekannt, bei dem an einem einzigen unteren Holm zwei Schrägholme vorderseitig über ein Gelenkteil angelenkt sind. Ferner ist eine Vorderradanordnung an diesem Holm befestigt. Der untere Holm ist Träger eines Spreizgestänges, das die beiden oberen Schrägholme, in deren Verlängerung Schiebestangen vorgesehen sind, aufgestellt hält, sowie zwei untere Stangen, an deren Enden Hinterräder befestigt sind. Diese Stangen sind schwenkgelenkig am unteren Holm im mittleren Bereich befestigt.

Ausgehend vom vorbekannten Stand der Technik liegt der Erfindung die Aufgabe zugrunde, ein gattungsgemäßes Schiebewagengestell, dass beispielsweise für Kinder- und Puppenwagen, für sogenannte Buggy's, aber auch für Rollatoren verwendet werden kann, so auszugestalten, dass automatisch beim Zusammenfalten des Schiebewagengestelles die Vorderräder aus der aufgestellten Gebrauchsstellung, auf der diese auf einen Fahrboden abrollen können, in eine Verstauposition verschwenken, wobei über eine einzige Mitkopplung ein Verschwenken einer Radaufhängung der Vorderradanordnung bewirkt werden soll und es im Belieben des Fachmannes liegt, mindestens die Schrägholme beliebig zu gestalten, beispielsweise V- oder parabelförmig untenseitig zusammenlaufen zu lassen oder auch parallel verlaufen zu lassen.

Gelöst wird die Aufgabe durch Ausgestaltung des Schiebewagengestells gemäß der im Anspruch 1 angegebenen technischen Lehre.

Die Erfindung zeichnet sich beim erfindungsgemäßen Schiebewagengestell dadurch aus, dass zwischen den beiden seitlichen Schrägholmen oder an dem diese frontseitig verbindenden Brückenelement einerseits und dem Halter andererseits eine in direkter Wirkverbindung stehende Kopplungsmechanik vorgesehen ist, die die Bewegung der seitlichen Schrägholme in eine Schwenkbewegung des Halters beim Zusammenklappen des Schiebewagengestells in Richtung des mindestens einen unteren Holmes und beim Aufstellen des Schiebewagens in entgegengesetzter Richtung transformiert, und dass der um eine horizontale Achse verschwenkbare Halter und das ebenfalls um eine horizontale Achse verschwenkbare Brückenelement in mindestens einem Abstandshalter beabstandet zueinander verschwenkbar gelagert sind, welche Abstandshalter an dem mindestens einen unteren Holm fixiert ist.

Vorteilhafte Ausgestaltungen der Erfindung sind in den Unteransprüchen im Detail angegeben.

In einfachster Ausführung kann beispielsweise dann, wenn nur ein einziger unterer Holm vorgesehen ist, an diesem vorderseitig eine Gabel mit Lagerungsbohrung für die Aufnahme des Halters angebracht sein. Der Halter selbst ist drehbar in dieser Aufnahme gelagert und kann durch Rasten beispielsweise in zwei Positionen festgestellt werden. Solche Sicherungselemente können aber auch an der Kopplungsmechanik vorgesehen sein oder mit dieser in Wirkverbindung stehen, damit im aufgestellten Zustand der Radanordnung oder Radanordnungen der Halter sich nicht drehen kann. Betätigt wird der Halter jedoch mittels einer Bewegungstransformation der Schrägholme, beim Zusammenklappen derselben. Diese können beispielsweise parallel an einem Brückenelement befestigt sein, das wiederum an dem einzigen Holm schwenkbeweglich gelagert ist. Es können aber auch an dem Brückenelement Gelenke vorgesehen sein, die es ermöglichen, V- oder ovalförmig zusammengeführte Schrägholme am Brückenteil sowohl in vertikaler als auch horizontaler Richtung zusammenzuklappen. Beispielsweise kann das notwendige Gelenk durch eine nach oben stehende Lasche mit Lagerungen gebildet sein, an denen das Brückenelement drehbar fixierbar ist. Das Brückenelement kann überstehende Verlängerungen aufweisen, an denen die Schrägholme bei paralleler Ausführung befestigt sind. Im Falle der V-förmigen zusammenlaufenden Ausführung oder der ovalen Ausprägung kann das Brückenteil verkürzt ausgeführt sein. In diesem Fall sind an dem Brückenelement Gelenke angeordnet, so dass diese Stangen auch aufeinanderzu verschwenkt werden können.

Als Koppelmechanik für die Bewegungstransformation können Kniegelenke beispielsweise vorgesehen sein, wobei der untere Arm am Halter befestigt ist, so dass hierüber ein Drehmoment auf diesen ausgeübt werden kann, während die zweite Stange gelenkig an einem Schrägholm angebracht ist. Andere mechanische Ausführungen, einschließlich solcher mit Hebelübersetzungen, sind hier auch einsetzbar, um in gewünschter Weise beim Niederdrücken der Schrägholme ein Hochklappen der Radanordnungen zu ermöglichen. Um das Schiebewagengestell im zusammengeklappten Zustand nicht zu verlängern, sollte dabei die Koppelmechanik so angeordnet sein, dass die Radanordnung nach hinten, also in Richtung des mindestens einen Holmes schwenkt.

Anstelle eines einzigen Holmes können aber auch zwei Holme vorgesehen sein, diese können an einer breiten Öse, die auf einem länglichen Halter aufgezogen ist, beispielsweise festgeschweißt sein. Die seitlichen Verlängerungen des Halters sind dann beispielsweise mit dem unteren Schenkel des Kniehebels verbunden und in Verlängerung sind die Radlageranordnungen befestigt. Diese Ausführung empfiehlt sich beispielsweise, wenn die Schrägholme und die unteren Holme parallel verlaufend angeordnet sind und das Schiebewagengestell nur in vertikaler Richtung zusammenfaltbar ist. Wenn hingegen die unteren Holme auch V-förmig oder oval vorderseitig zusammenlaufen, kann der Halter wesentlich verkürzt werden.

Eine besonders einfache Koppelmechanik besteht aus zwei Zahnkränzen, die ineinander greifen, wobei beim Verschwenken der Schrägholme aus der aufgestellten Gebrauchsposition in eine untere Verstaustellung der stationär am Halter angebrachte Zahnkranz den Halter mit der mindestens einen Vorderradanordnung in Richtung des mindestens einen unteren Holmes verschwenkt. Hier ist also eine direkte Kopplung über die Zahnkränze gegeben, wobei der Zahnkranz nur soweit sich um den Halter erstrecken muss und auf dem Brückenelement, an dem die Schrägholme angebracht sind, umfangsmäßig vorgesehen sein muss, dass durch die Drehbewegung des Brückenelementes die Verschwenkbewegung des Halters mit den Radanordnungen in gewünschter Weise erfolgt, also eine etwa 90°Grad-Schwenkung vollzogen werden kann.

Wenn anstelle eines einzelnen unteren Holmes, an dessen hinterem Ende ein Querstab Hinterräder trägt, zwei untere Holme spiegelbildlich angeordnet vorgesehen sind, können an deren hinteren Enden Stützstreben und/oder Lagerhalter für Hinterräder vorgesehen sein. Auch hierüber wird sichergestellt, dass beim Verschwenken der Schrägholme über die Mitkopplung ein Verschwenken des Halters bewirkt wird. Bei V-förmiger oder ovaler Ausführung der Schrägholme, in deren Verlängerung die Schiebestangen vorgesehen sind, sind die unteren Holme um Vertikalachsen verschwenkbar mit den vorderen Enden an dem Halter drehbeweglich befestigt, so dass der Halter eine Horizontalachse bildet, um das Verschwenken der Radanordnung in gewünschter Weise sicherzustellen. Sie können beispielsweise für das Zusammenklappen an zwei seitlichen Hülsen befestigt sein, durch die eine Welle geführt ist. Auf dieser Welle befindet sich mittig ein Zahnrad, so dass hierüber die Welle gegenüber der feststehenden tragenden Hülsen verdreht werden kann. An den Enden der Wellen sind die Vorderradanordnungen starr befestigt. Es kann sich dabei um eine Einzelradanordnung oder auch um zwei beabstandet zueinander oder eng beieinander liegende Radanordnungen handeln.

Da beim Zusammenklappen von Teilen, die über eine Kopplungsmechanik miteinander verbunden sind, auch Verletzungsgefahr bestehen kann, z. B. durch Einklemmen von Fingern, und darüber hinaus die Kopplungsmechanik sichtbar ist, ist in weiterer Ausgestaltung vorgesehen, dass der Halter und das Brückenelement mindestens teilweise und mindestens frontseitig durch eine Blende verdeckt sind. Diese Blende kann beispielsweise eine Fußraste eines Kinderwagens sein, die das Gelenk übersteht.

Damit eine Kurvenbahn gefahren werden kann, sollte die Vorderradanordnung eine Aufnahme für einen vertikalen Bolzen aufweisen, an dem eine Gabel oder ein anderer Radhalter für ein oder mehrere Vorderräder befestigbar ist, wodurch durch entsprechende Schrägstellung der Gabel oder des Radhalters - wie bekannt - sichergestellt ist, dass die Räder sich automatisch der gewünschten Fahrtrichtung entsprechend ausrichten.

Weitere vorteilhafte Ausgestaltungen sind in den Unteransprüchen im Detail angegeben.

Die Erfindung wird nachfolgend anhand der in den Zeichnungen dargestellten Ausführungsbeispiele ergänzend erläutert.

In den Zeichnungen zeigen:
- Fig. 1: ein vereinfacht dargestelltes Schiebewagengestell mit erfindungsgemäß ausgebildeten hochklappbaren Vorderradanordnungen in einer perspektivischen Darstellung,
- Fig. 2: das in Figur 1 dargestellte Ausführungsbeispiel mit einer zusätzlichen Bein- und Fußstütze im zusammengeklappten Zustand und
- Fig. 3: eine vergrößerte Darstellung der Kopplungsmechanik für den Halter der Vorderradanordnung.

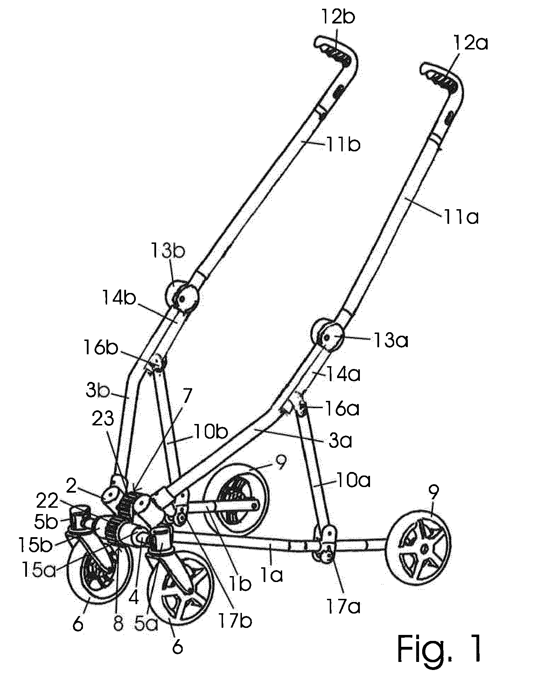

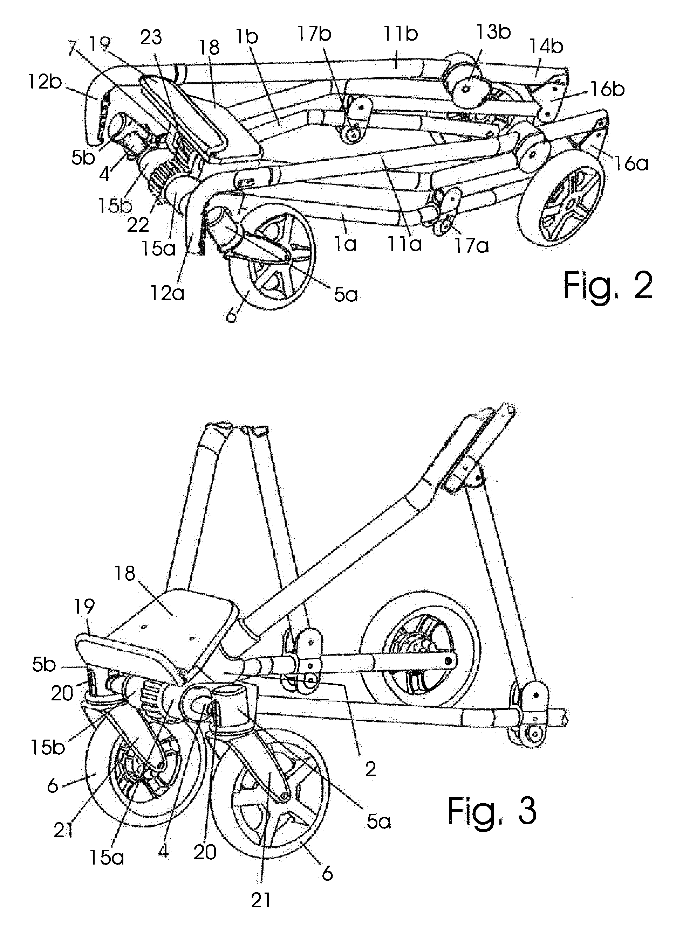

Das in den Figuren 1 bis 3 dargestellte Ausführungsbeispiel zeigt ein Schiebewagengestell für einen Kinderwagen oder Kindersportwagen, wobei die Einsätze und die Haltevorrichtungen hierfür der Einfachheit halber nicht dargestellt sind. Das Schiebewagengestell besteht aus zwei unteren Holmen 1a, 1b, die sich von vorn nach hinten erstrecken und an ihren Enden Radlagerhalter für Hinterräder 9 aufweisen. Vorderseitig sind die V-förmig zulaufenden unteren Holme 1a, 1b an Hülsen 15a, 15b befestigt, die Bestandteil der unteren Kopplungsmechanik 8 sind und auf einer Welle aufgeschoben sind, die den Halter 4 für die seitlich angebrachten Vorderradanordnungen 5a und 5b bildet. Die Vorderradanordnungen bestehen aus einem oberen Teil, das ein Lager beinhaltet, in dem ein im wesentlichen vertikal verlaufender Bolzen drehbar gelagert ist, der mittels Feststeller 20, den als Schiebesteller vorgesehen ist (Fig. 3), in bestimmten Drehstellungen arretierbar ist, z. B. um die Räder parallel zur Lagerachse des Schiebewagengestells auszurichten. An den Bolzen sind untenseitig Gabeln 21, nach hinten schräg gerichtet, angebracht, an deren Schenkelenden Lager für die Vorderräder 6 vorgesehen sind. Wenn der Feststeller 20 in die Freigabestellung verschoben wird, können sich die Vorderradanordnungen 5a, 5b beim Kurvenfahren drehen. Wesentlicher Bestandteil der unteren Koppelmechanik 8 ist aber ein Zahnrad 22, das auf dem Halter 4, hier eine Welle, fest aufgebracht ist, so dass sich beim Drehen des Zahnrades 22 automatisch der Halter 4 dreht und damit auch die Vorderradanordnungen 5a, 5b.

Vorderseitig sind Schrägholme 3a, 3b, V-förmig unten zulaufend vorgesehen, die sich nach oben weiten und dann einen etwa parallelen Abschnitt zur Aufnahme nicht dargestellter Einsätze, wie Liege- oder Sitzeinsätze für Kinder, tragen. Ebenfalls sind die Haltelemente, die hierfür benötigt werden, nicht dargestellt. Diese beiden Schrägholme 3a, 3b sind über ein Brückenelement 2 untenseitig miteinander verbunden. Das Brückenelement 2 ist relativ verdrehbar gegenüber den Hülsen 15a, 15b angeordnet und weist ein fest aufgebrachten Zahnkranz 23 als Bestandteil der oberen Kopplungsmechanik 7 auf. Dieser Zahnkranz 23 steht stets in Wirkverbindung mit dem Zahnrad 22 am Halter 4. Darüber hinaus sind an den Seiten des Brückenelementes 2 die Schrägholme 3a, 3b horizontal verschwenkbar angeordnet. Es ist ersichtlich, dass die vier Holme sowohl vertikal als auch horizontal zusammengeführt werden können.

Um ein einfaches Zusammenlegen des Schiebewagengestells zu ermöglichen, sind Schiebestangen 11a, 11b an den an den Enden der Schrägholme 3a, 3b angebrachten Gelenken 13a, 13b befestigt. Die Schiebestangen 11a, 11b weisen jeweils einen die Gelenke 13a, 13b untenseitig überstehenden Überstand 14a, 14b auf und obenseitig Schiebegriffe 12a, 12b. An den Enden der untenseitigen Überstände 14a, 14b sind Gelenke 16a, 16b befestigt, an denen um eine horizontale Achse schwenkbeweglich Stützholme 10a, 10b angelenkt sind, deren unteren Enden an Gelenken 17a, 17b an den jeweiligen unteren Holmen 1a, 1b befestigt sind.

Es ist ersichtlich, dass beim Vorschwenken der Schiebestangen 11a, 11b die Gelenke 13a, 13b nach hinten verschwenken und dabei Stützstangen 10a, 10b mit sich ziehen. Die Schiebestreben 10a, 10b können dabei soweit verschwenkt werden, dass sie auf den oberen Abschnitten der Schrägholme 3a, 3b aufliegen.

Aus der Figur 2 ist ersichtlich, dass bei entsprechender Dimensionierung die Schiebegriffe 12a, 12b vor den Vorderradanordnungen 5a, 5b im zusammengeklappten Zustand enden. Durch die Kopplungsmechanik 7, 8 mit dem Zahnrad 22 und dem Zahnkranz 23 wird beim Vorschwenken der Schrägholme 3a, 3b aus der dargestellten Aufstellposition in Figur 1 in die zusammengefaltete Position in Figur 2 automatisch das Zahnrad 22 gedreht, so dass dabei die Vorderräder nach oben verschwenken, so dass die vorderen Räder 6 unmittelbar neben den unteren Holmen 1a, 1b zur Anlage gelangen, so wie dies aus Figur 2 ersichtlich ist. Im aufgestellten Zustand, was auch aus Figur 3 ersichtlich ist, wird die Koppelmechanik 7, 8 durch eine Beinstütze 18 und einer daran gelenkig angebrachten Fußstütze 19 verdeckt, so dass die Mechanik nicht deutlich sichtbar in Erscheinung tritt. Wenn die Schiebestangen 11a, 11b aus der unteren zusammengeklappten Position des Schiebewagengestells wieder hochgeschwenkt werden, folgt automatisch eine Aufstellung der Vorderradanordnung über den Halter 4.

Es versteht sich von selbst, dass zum horizontalen Zusammenfalten des Gestells noch ein Scherengestell oder ein Zweifachscherengestell entweder zwischen den unteren Holmen und/oder zwischen den unteren und/oder den Stützholmen 10a, 10b vorgesehen sein muss, damit hierüber beim Zusammenfalten oder umgekehrt beim Aufstellen die Holme automatisch auseinanderspreizen bzw. zusammenfahren.

### Bezugszeichenliste

- 1a,b: untere Holme
- 2: Brückenelement
- 3a,b: Schrägholme
- 4: Halter
- 5a,b: Vorderradanordnung
- 6: Vorderrad
- 7: obere Kopplungsmechanik
- 8: untere Kopplungsmechanik
- 9: Hinterräder
- 10a,b: Stützstreben
- 11a,b: Schiebestangen
- 12a,B: Schiebegriff
- 13a,b: Gelenk
- 14a,b: Überstand
- 15a,b: Hülsen
- 16a,b: Gelenke
- 17a,b: Gelenke
- 18: Beinstütze
- 19: Fußstütze
- 20: Feststeller
- 21: Gabeln
- 22: Zahnrad
- 23: Zahnkranz

## Patentansprüche

1. Schiebewagengestell, aufweisend mindestens einen unteren, sich von vorne nach hinten erstreckenden Holm (1a, 1b), an dem vorderseitig unmittelbar oder an einem damit verbundenen Brückenelement (2) zwei seitliche, sich von unten nach oben erstreckende, mindestens in vertikaler Richtung verschwenkbare Schrägholme (3a, 3b) angelenkt sind, die zum Zwecke des Zusammenklappens des Schiebewagengestells nach unten, in Richtung der Ebene des mindestens einen unteren Holmes (1a, 1b) verschwenkbar sind, wobei an dem mindestens einen unteren Holm (1a, 1b) vorderseitig ein Halter (4) für mindestens eine Vorderradanordnung (5a, 5b) mit mindestens einem Rad (6) angebracht ist, das aus einer nach unten aufgestellten Fahrposition in eine Verstauposition nach oben verschwenkbar angeordnet ist, und der Halter (4) mit der mindestens einen Vorderradanordnung (5a, 5b) an einem unteren Holm (1a, 1b) um eine horizontale Achse quer zur Längsachse des Schiebewagengestells und aus einer nach unten geklappten aufgestellten Position in Richtung der Ebene des unteren Holms (1a, 1b) verschwenkbar angeordnet ist, **dadurch gekennzeichnet,**
- **dass** zwischen den beiden seitlichen Schrägholmen (3a, 3b) oder an dem diese frontseitig verbindenden Brückenelement (2) einerseits und dem Halter andererseits (4) eine in direkter Wirkverbindung stehende Kopplungsmechanik (7, 8) vorgesehen ist, die die Bewegung der seitlichen Schrägholme (3a, 3b) in eine Schwenkbewegung des Halters (4) beim Zusammenklappen des Schiebewagengestells in Richtung der Ebene mindestens eines unteren Holmes (1a, 1b) und beim Aufstellen des Schiebewagens in entgegengesetzter Richtung transformiert, und
- **dass** der um eine horizontale Achse verschwenkbare Halter (4) und das ebenfalls um eine horizontale Achse verschwenkbare Brückenelement (2) an mindestens einem Abstandshalter beabstandet zueinander verschwenkbar gelagert sind, welcher Abstandshalter an dem mindestens einen unteren Holm (1a, 1b) fixiert ist.

2. Schiebewagengestell nach Anspruch 1, **dadurch gekennzeichnet, dass** die Kopplungsmechanik (7, 8) aus zwei Zahnkränzen (22, 23) besteht, die ineinander greifen, wobei beim Verschwenken der Schrägholme (3a, 3b) aus der aufgestellten Gebrauchsstellung in eine untere Verstaustellung der stationär und sich mitdrehend an dem Halter (4) angebrachte Zahnkranz (22) den Halter (4) mit der mindestens einen Vorderradanordnung (5a, 5b) in Richtung des mindestens einen unteren Holmes (1a, 1b) nach hinten verschwenkt.

3. Schiebewagengestell nach Anspruch 1, **dadurch gekennzeichnet, dass** zwei untere Holme (1a, 1b) spiegelbildlich angeordnet vorgesehen sind, an deren hinteren Enden Stützstreben (10a, 10b) und/oder Lagerhalter für Hinterräder (9) vorgesehen sind.

4. Schiebewagengestell nach Anspruch 3, **dadurch gekennzeichnet, dass** die unteren Holme (1a, 1b) mindestens um Vertikalachsen verschwenkbar mit den vorderen Enden an dem Halter (4) angelenkt sind.

5. Schiebewagengestell nach Anspruch 1, **dadurch gekennzeichnet, dass** die Kopplungsmechanik (7, 8) aus mindestens einem Kniehebel besteht, dessen einer Schenkel starr an einem Schrägholm (3a, 3b) befestigt ist, an dessen anderem Ende ein zweiter Schenkel angelenkt ist, der seinerseits an einem Schwenklager an dem drehbaren Halter (4) befestigt ist.

6. Schiebewagengestell nach Anspruch 1, **dadurch gekennzeichnet, dass** der Halter (4) und das Brückenelement (2) mindestens teilweise frontseitig durch eine Blende verdeckt sind.

7. Schiebewagengestell nach Anspruch 1, **dadurch** g e - kennzeichnet, dass an dem Halter (4) eine Vorderradanordnung (5a, 5b) mit einer Gabel (21) oder einem Radlagerhalter zur Aufnahme mindestens eines einzelnen Vorderrades (6) vorgesehen ist.

8. Schiebewagengestell nach Anspruch 1, **dadurch gekennzeichnet, dass** die Vorderradanordnung (5a, 5b) ein Vertikallager aufweist, in das ein Lagerzapfen an einer um eine Vertikalachse verdrehbar und/oder feststellbar gelagerte Gabel (21) oder ein Radlagerhalter zur Aufnahme des Vorderrades (6) vorgesehen ist, oder an dem Halter (4) beidseitig Vorderradanordnungen (5a, 5b) zur Aufnahme von Vorderrädern (6) vorgesehen sind.

9. Schiebewagengestell nach Anspruch 1, **dadurch gekennzeichnet, dass** die Schrägholme (3a, 3b) vorderseitig miteinander schwenkbeweglich zur Mittenlängsachse des Schiebewagengestells oder an einem Brückenelement (2) relativ zur Mittellängsachse des Schiebewagengestells verschwenkbar angelenkt sind und beim Zusammenklappen des Schiebwagengestells die Schrägholme (3a,3b) sowohl in horizontaler als auch in vertikaler Richtung bewegbar sind.

10. Schiebewagengestell nach Anspruch 3, **dadurch gekennzeichnet, dass** die unteren seitlichen Holme (1a, 1b) an dem Abstandshalter (4) relativ zur Mittenlängsachse des Schiebewagengestells angelenkt sind.

11. Schiebewagengestell nach Anspruch 1, **dadurch gekennzeichnet, dass** der Abstandshalter (4) fest mit den unteren Holmen (1a, 1b) verbunden ist, dass auf dem Halter (4) die Koppelmechanik (8) verdrehbar angeordnet ist und dass mit der Koppelmechanik (8) die Vorderradanordnungen (5a, 5b) verbunden sind.

12. Schiebewagengestell nach Anspruch 1, **dadurch gekennzeichnet, dass** bei Verbringen der oberen Schrägholme (3a, 3b) in die aufgestellte Schrägposition die Vorderradanordnungen (5a, 5b) aus der Verstauposition, in der das Rad oder die Räder (6) im Bereich des mindestens einen unteren Holmes (1a, 1b) liegt bzw. liegen, nach unten in die Fahrposition aufgestellt und über eine Arretierung des Schiebewagengestells mit arretiert sind oder zusätzlich arretierbar sind.

13. Schiebewagengestell nach Anspruch 1, **dadurch gekennzeichnet, dass** eine Verriegelungseinrichtung vorgesehen ist, die die Kopplungsmechanik (7, 8) mindestens im aufgestellten Zustand des Vorderrades (6) gegen Verstellen blockiert.
